# EUROPÄISCHE PATENTSCHRIFT

(11) **EP 2 441 556 B1**
(45) Veröffentlichungstag und Bekanntmachung des Hinweises auf die Patenterteilung: **30.07.2014**
(21) Anmeldenummer: 11181900.9
(22) Anmeldetag: 20.09.2011
(51) Int. Cl.: B29C 33/00, B29C 70/44, B29C 70/46, B29C 70/48

(54) **Verfahren zur Fertigung von Bauteilen in einem druckdichten Formwerkzeug**
Method for producing components in a pressure-tight moulding tool
Procédé de fabrication de composants dans un outil de formage étanche à la pression

(30) Priorität: 12.10.2010 DE 102010038115
(43) Veröffentlichungstag der Anmeldung: 18.04.2012
(73) Patentinhaber: Deutsches Zentrum für Luft- und Raumfahrt e.V., 51147 Köln (DE)
(72) Erfinder: Hilmer, Philipp, 38104 Braunschweig (DE); Friedrich, Martin, 30161 Hannover (DE)
(74) Vertreter: REHBERG HÜPPE + PARTNER

(56) Entgegenhaltungen:
- GB-A- 818 382
- US-A- 5 543 159

## Beschreibung

Die Erfindung bezieht sich auf ein Verfahren zur Fertigung von Bauteilen in einem druckdichten Formwerkzeug mit den Merkmalen des Oberbegriffs des unabhängigen Patentanspruchs 1.

Insbesondere, aber keinesfalls ausschließlich, betrifft die vorliegende Erfindung ein Verfahren, dass zur "Resin-Transfer-Moulding" (RTM)-Technik zu zählen ist. Bei einem solchen Verfahren wird ein zunächst im Wesentlichen trockenes, das heißt noch nicht mit Harz infiltriertes Fasergelege mit flüssigem Harz infiltriert, indem das flüssige Harz in das zuvor evakuierte Formwerkzeug injiziert wird. Die vorliegende Erfindung ist weiterhin auf Verfahren zur Fertigung von Faserverbundbauteilen anwendbar, die auf sogenannten Prepregs aufbauen, welche neben Verstärkungsfasern bereits das Harz zur Ausbildung einer Harzmatrix eines zu fertigenden Faserverbundbauteils aufweisen. Auch dann muss das Formwerkzeug um die zunächst hergestellte Vorform abgedichtet und evakuiert werden, um in der Vorform enthaltene Gasanteile zu entfernen. Die vorliegende Erfindung ist jedoch nicht auf solche Anwendungen beschränkt, bei denen das Formwerkzeug evakuiert wird. Stattdessen oder zusätzlich kann in dem Formwerkzeug oder seiner Umgebung auch ein Überdruck aufgebaut werden. So kann ein Evakuieren des Formwerkzeugs, wenn dieses zum Beispiel nur eine formsteifen Formhälfte aufweist, auch dazu dienen, über die andere Formhälfte, die beispielsweise als flexible Vakuumfolie ausgebildet ist, einen Differenzdruck auf eine Vorform in dem Formwerkzeug auszuüben, der die Vorform kompaktiert und an die formsteife Formhälfte andrückt. Dieser Differenzdruck kann durch einen in der Umgebung des Formwerkzeugs aufgebrachten Überdruck weiter erhöht werden. Jede Druckdifferenz zwischen dem Inneren des Formwerkzeugs und der Umgebung des Formwerkzeugs wirkt auf die Abdichtung des Formwerkzeugs. Die erreichbare Größe des Differenzdrucks und auch das Niveau eines Vakuums in dem Formwerkzeug sind von der Qualität der Abdichtung des Formwerkzeugs unmittelbar abhängig.

Das erfindungsgemäße Verfahren ist ebenso wenig nur für die Herstellung von Bauteilen aus duroplastischen Harzen, die durch eine Wärmebehandlung ausgehärtet werden, sondern auch für die Herstellung von Bauteilen aus thermoplastischen oder elastomeren Harzen geeignet. Unabhängig von der Art des Harzes wird das Formwerkzeug bei der Fertigung eines einzelnen Bauteils neben der Druckdifferenz über seine Abdichtung unterschiedlichen Temperaturen über einen Temperaturbereich ausgesetzt, der für Kunststoffe als groß zu bezeichnen ist.

### STAND DER TECHNIK

Aus der DE 27 46 173 B2 sind ein Verfahren und eine Vorrichtung zur Herstellung von Bauteilen aus faserverstärkten Kunststoffen bekannt, bei denen über zwei Formschalenhälften eine Vakuumfolie gelegt wird, die mittels Dichtmasse bzw. eines Dichtstreifens auf einer Grundplattenoberseite dichtend anliegt.

Bei der Fertigung von Faserverbundbauteilen ist es bekannt, längs der Dichtlinie im Randbereich der Formhälften des Formwerkzeugs Dichtungsmaterialien einzulegen. Dies ist aufwändig, insbesondere wenn dort beispielsweise eine Falten werfende Vakuumfolie gegenüber einer formsteifen Formhälfte abzudichten ist. Auch ein dichtes Verkleben der Falten der Vakuumfolie ist mit hohem Aufwand verbunden.

Fest an einer Formhälfte angebrachte elastische Dichtungen müssten zwar nicht separat eingelegt werden, sie können aber Probleme mit komplexen Verläufen der Abdichtlinie, wie sie beispielsweise mit Falten in einer Vakuumfolie verbunden sind, nicht bewältigen, und sie sind einer erheblichen thermischen Wechselbelastung durch die unterschiedlichen Temperaturen ausgesetzt, auf die das Formwerkzeug bei der Fertigung jedes einzelnen Faserverbundbauteils gebracht wird.

Aus der Kunststoffspritzgusstechnik sind Dichtformationen aus abgerundeten in Nuten eingreifenden Federn bekannt, die sich längs der Dichtlinie um das Formwerkzeug erstrecken, aber keinen Aufbau größerer Druckunterschiede ermöglichen.

Auf dem Bausektor sind sogenannte Montageschäume auf Polyurethanbasis mit Treibmitteln bekannt, mit denen beispielsweise Fenster oder Türen in Maueröffnungen fixiert und gegenüber dem angrenzenden Mauerwerk abgedichtet werden können.

In der Automobil- und Elektroindustrie werden Dichtungsschäume beispielsweise zum Abdichten von Schallschranktüren, Langfeldleuchten für den Nassbereich und von Kunststoffgehäusen eingesetzt. Spezielle Dichtungsschäume stellen dabei Schutz selbst gegen starkes Strahlwasser bereit und halten im verpressten Zustand auch einem Wasserdruck von 10 m Stand.

Aus der US 5,543,159 A ist es zur Ausbildung eines Formwerkzeugs für ein Reaction-Injection-Molding (RIM)-Verfahren bekannt, einen Streifen aus ungehärtetem Harz auf eine Formhälfte aufzutragen, das Formwerkzeug dann durch Zusammenfügen seiner Formhälften zu schließen und auf seine Betriebstemperatur zu bringen, um das Harz in einen halbharten Zustand auszuhärten. Das Formwerkzeug wird dann geöffnet, und das Harz wird, soweit es in die Formkavität gelangt ist, entfernt. Nachdem das Harz vollständig ausgehärtet wurde, ist das Formwerkzeug fertig für seine Verwendung. Durch das angeformte Harz wird die Druckdichtigkeit des Formwerkzeugs im geschlossenen Zustand erreicht.

Aus der GB 818,382 ist es zum Ausbilden einer Dichtung bei einem Formwerkzeug bekannt, einen Streifen aus Dichtungsmaterial in zwei einander gegenüberliegenden Nuten in zwei Formhälften einzubringen. Das Dichtmaterial weist ein Treibmittel auf und wird innerhalb des von den beiden Nuten begrenzten Raums expandiert. Dabei bindet das Dichtmaterial an die Oberfläche der einen Nut an, die entsprechend vorbehandelt ist, während die Oberfläche der anderen Nut mit einem Anhaftungsverhinderungsmittel versehen ist. So bleibt die durch Expandieren des Dichtmaterials gebildete Dichtung nur in der einen Nut verankert, wenn die beiden Formhälften getrennt werden.

Aus der DE 10 2005 022 195 A1 ist eine Abdichtung für einen in eine Kavität eines Formwerkzeugs eingebrachten Expansionsschaum bekannt. Das Formwerkzeug besteht aus zwei Werkzeughälften, die bei geschlossenen Formwerkzeug durch eine Fuge voneinander getrennt sind. Im Bereich der Fuge ist eine umlaufende Sicke vorgesehen, die ein die Fuge des abdichtendes Dichtmittel aufnimmt., wobei die Sicke an eine der beiden Werkzeughälften fest angebunden ist. Das Dichtmittel resultiert aus dem über eine Düse oder Lanze in die Kavität eingebrachten Expansionsschaum, der zum Austreten aus der Kavität neigt.

### AUFGABE DER ERFINDUNG

Der Erfindung liegt die Aufgabe zugrunde, ein Verfahren zur Fertigung von Bauteilen in einem druckdichten Formwerkzeug, mit dem der Aufwand bei der Abdichtung des Formwerkzeugs auch bei komplexen geometrischen Verläufen der Dichtlinie deutlich vereinfacht wird.

### LÖSUNG

Erfindungsgemäß wird die Aufgabe durch ein Verfahren mit den Merkmalen des unabhängigen Patentanspruchs 1 gelöst. Die abhängigen Patentansprüche betreffen bevorzugte Ausführungsformen des neuen Verfahrens.

### BESCHREIBUNG DER ERFINDUNG

Bei dem neuen Verfahren zur Fertigung von Bauteilen in einem druckdichten Formwerkzeug wird zum Abdichten des Formwerkzeugs eine fließfähige polymere Dichtmasse zwischen zwei einander gegenüberliegenden, gegeneinander abgestützten und gegeneinander abzudichtenden Dichtflächen in einen Dichtbereich des Formwerkzeugs injiziert und dort unter Bereitstellen eines gegen die einander abzudichtenden Dichtflächen gerichteten Abdichtdrucks durch die Dichtmasse fixiert. Bei dem neuen Verfahren wird also die Abdichtung jeweils durch Ausbildung einer neuen, sich durch ihre Fließfähigkeit exakt an den jeweiligen geometrischen Verlauf der Dichtflächen anpassenden Dichtmasse bewirkt. Diese Dichtmasse wird in ihrer noch fließfähigen Form zwischen die Dichtflächen eingebracht und dort fixiert, wobei ein Abdichtdruck gegen die gegeneinander abzudichtenden Dichtflächen bereitgestellt wird. Das heißt, der Abdichtdruck und die resultierende Abdichtung werden nicht erst dadurch erreicht, dass die Dichtflächen mit der dazwischen befindlichen Dichtmasse gegeneinander gepresst werden, obwohl es der Verwirklichung der vorliegenden Erfindung nicht widerspricht, wenn ein solches nachträgliches Gegeneinanderpressen der Dichtflächen zusätzlich erfolgt. In jedem Fall wird bei der Erfindung aber bereits durch die Art und Weise des Einbringens und/oder des Fixierens und/oder die Zusammensetzung der Dichtmasse dafür gesorgt, dass zwischen den Dichtflächen ein Abdichtdruck aufgebracht wird. Unter dem Fixieren der Dichtmasse ist zu verstehen, dass diese bezüglich ihrer Fließfähigkeit eingeschränkt wird, so dass sie ihren Ort zwischen den Dichtflächen auch unter Einwirkung eines hohen Differenzdrucks beibehält. Dass die Dichtmasse fixiert wird, bedeutet nicht, dass sie völlig ausgehärtet wird. Es bedeutet aber auch nicht, dass sie soweit ausgehärtet werden muss, dass sie überhaupt nicht mehr fließfähig ist. Es reicht vielmehr aus, dass sie während der Fertigung der Bauteile ihren gewünschten Ort zwischen den Dichtflächen nicht durch Fließen verlässt.

Insbesondere wird die fließfähige Dichtmasse durch zumindest teilweises Vernetzen ihrer Polymerkomponenten in dem Dichtbereich des Formwerkzeugs fixiert. Das heißt, bei der Dichtmasse handelt es sich vorzugsweise um ein Elastomer ohne thermoplastische Eigenschaften. Das Vernetzen der Dichtmasse zu ihrer Fixierung kann durch ein Zwei-Komponenten-System, einen Katalysator und/oder thermisch gesteuert werden.

Die fließfähige Dichtmasse kann unter hydraulischem Druck in den Dichtbereich des Formwerkzeugs eingebracht und in diesem fixiert werden, um auf diese Weise den Abdichtdruck gegen die gegeneinander abzudichtenden Dichtflächen durch die Dichtmasse bereitzustellen.

Der fließfähigen Dichtmasse kann beim oder vor dem Einbringen in den Dichtbereich des Formkörpers auch ein Treibmittel zugesetzt werden, dass den gewünschten Abdichtdruck gegen die gegeneinander abzudichtenden Dichtflächen aufbaut. Dieses Treibmittel kann beim oder nach dem Einbringen der Dichtmasse in den Dichtbereich des Formwerkzeugs aktiviert werden, wenn es sich um ein reaktives Treibmittel handelt. Ein Treibmittel setzt typischerweise ein Gas frei. Es kann aber auch direkt ein Gas, vorzugsweise ein inertes Gas als Treibmittel eingesetzt werden. In jedem Fall sollte das Treibmittel geschlossene gasgefüllte Poren in der Dichtmasse ausbilden. Bei einem auf derartigen gasgefüllten Poren basierenden Abdichtdruck gegen die gegeneinander abzudichtenden Dichtflächen erweist es sich als Vorteil, dass dieser Abdichtdruck mit zunehmender Temperatur aufgrund des Gasgesetzes ansteigt, so lange er von der Dichtmasse in Richtung parallel zu den Dichtflächen abgestützt werden kann. Dazu muss die Dichtmasse einen ausreichend hohen Vernetzungsgrad aufweisen. Eine zunehmende Temperatur erhöht auch bei einer soliden Dichtmasse ohne Poren den Abdichtdruck, solange deren thermische Ausdehnung größer ist als diejenige des Formwerkzeugs, was die Regel ist, und solange die Dichtmasse den Abdichtdruck parallel zu den Dichtflächen abstützen kann.

Der zunächst noch fließfähigen Dichtmasse kann zudem beim oder vor dem Einbringen in den Dichtbereich des Formwerkzeugs ein Trennmittel zugesetzt werden. Dieses Trennmittel kann das Ablösen der Dichtmasse nach der Fertigung des Faserverbundbauteils von zumindest den Teilen des Formwerkzeugs erleichtern, die wiederverwendet werden sollen. Statt das Trennmittel der fließfähigen Dichtmasse zuzusetzen, können die Dichtflächen auch vor dem Einbringen der fließfähigen Dichtmasse in den Dichtbereich des Formwerkzeugs mit dem Trennmittel beschichtet werden. Hierbei kann eine Beschichtung nur der Dichtflächen erfolgen, die an wiederzuverwertenden Teilen des Formwerkzeugs liegen.

Es ist jedoch auch möglich, bei der Abdichtung mit der Dichtmasse und auch bei deren räumlichen Fixierung in dem Dichtbereich deren Anhaftung an den Dichtflächen auszunutzen. Dann kann bei dem neuen Verfahren der Schritt hinzukommen, dass die Dichtmasse vor dem Entformen des Faserverbundbauteils längs einer Dichtlinie durchtrennt wird. Eine solche Durchtrennung kann auch sinnvoll sein, wenn die Dichtmasse bis in hinterschnittene Nuten in beide Dichtflächen hinein eingebracht wird.

Ganz grundsätzlich sind längs an der Dichtlinie verlaufende Nuten in mindestens einer der Dichtflächen sinnvoll, um die Fixierung der Dichtmasse in dem Dichtbereich durch die geometrischen Verhältnisse des Dichtbereichs zu unterstützen.

Das neue Verfahren kann zur Herstellung von Faserverbundbauteilen angewendet werden, indem eine Vorform mit einem Fasergelege in das Formwerkzeug eingebracht wird, bevor das Formwerkzeug abgedichtet wird. Insbesondere kann das flüssige Harz, das in dem abgedichteten Formwerkzeug bei dem neuen Verfahren ausgehärtet wird, in das zuvor evakuierte Formwerkzeug injiziert werden, um die Vorform mit dem Fasergelege darin einzubetten, so dass das Fasergelege Verstärkungsfasern für die Matrix aus dem ausgehärteten Harz ausbildet.

Ein Formwerkzeug für die Fertigung von Bauteilen nach dem neuen Verfahren kann eine Injektionseinrichtung zum Einbringen einer fließfähigen polymeren Dichtmasse in einen Dichtbereich des Formwerkzeugs zwischen zwei einander gegenüberliegenden, gegeneinander abgestützten und gegeneinander abzudichtenden Dichtflächen aufweisen. Die Injektionseinrichtung kann zum Injizieren der fließfähigen Dichtmasse unter Druck in den Dichtbereich des Formwerkzeugs vorgesehen sein. Eine Heizeinrichtung zum lokalen Erwärmen des Dichtbereichs zwecks Vernetzens der Dichtmasse kann vorgesehen sein. Die Injektionseinrichtung kann eine Treibmittel- und/oder Trennmitteldosierungseinrichtung aufweisen. Die Dichtflächen können aber auch zumindest teilweise direkt mit einem Trennmittel beschichtet sein; und der Dichtbereich kann durch mindestens eine, längs an der Dichtlinie verlaufenden Nut in einer der Dichtflächen definiert sein. Bezüglich weiterer Einzelheiten des neuen Formwerkzeugs wird auf die Erläuterung des neuen Verfahrens sowie die nachfolgende Figurenbeschreibung verwiesen.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden.

### KURZBESCHREIBUNG DER FIGUREN

Die Erfindung wir im Folgenden anhand von in den Figuren dargestellten bevorzugten Ausführungsbeispielen weiter erläutert und beschrieben.
- **Fig. 1**: zeigt einen Schnitt durch einen Dichtbereich zwischen zwei Formhälften eines Formwerkzeugs zur Fertigung von Faserverbundbauteilen zu Beginn des Abdichtens des Formwerkzeugs.
- **Fig. 2**: zeigt in einer Fig. 1 entsprechenden Darstellung das abgedichtete Formwerkzeug gemäß Fig. 1.
- **Fig. 3**: zeigt in einer Fig. 1 und 2 entsprechenden Schnittdarstellung ein anders abgedichtetes Formwerkzeug.
- **Fig. 4**: zeigt den Randbereich eines Formwerkzeugs zur Herstellung von Faserverbundbauteilen beim Abdichten des Formwerkzeugs.
- **Fig. 5**: zeigt einen in den Fig. 1-3 entsprechenden Schnitt durch ein abgedichtet Formwerkzeug beim Durchtrennen der Dichtung.
- **Fig. 6**: zeigt in einer den Fig. 1 bis 3 entsprechenden Schnittdarstellung den Dichtbereich eines weiteren Formwerkzeugs.
- **Fig. 7**: zeigt in einer den Fig. 1 bis 3 entsprechenden Schnittdarstellung den Dichtbereich noch eines weiteren Formwerkzeugs; und
- **Fig. 8**: zeigt in einer den Fig. 1 bis 3 entsprechenden Schnittdarstellung den Dichtbereich noch eines weiteren Formwerkzeugs.

### FIGURENBESCHREIBUNG

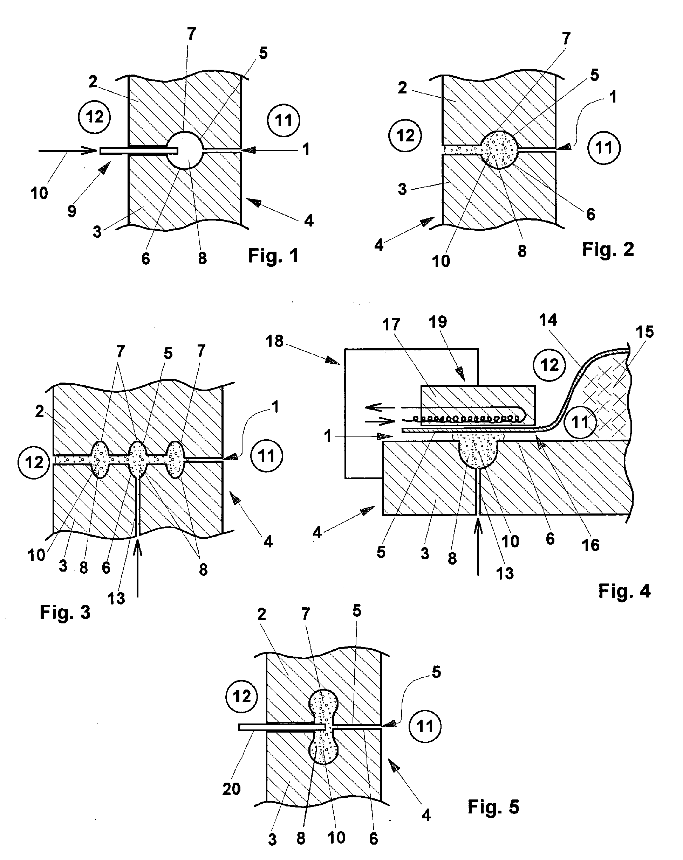

In **Fig. 1** ist schematisch ein Dichtbereich 1 zwischen zwei Formhälften 2 und 3 eines Formwerkzeugs 4 für die Fertigung von Bauteilen aus einem Harz dargestellt. Der Dichtbereich 1 liegt zwischen einer Dichtfläche 5 der Formhälfte 2 und einer Dichtfläche 6 der Formhälfte 3. In beiden Dichtflächen 5 und 6 ist jeweils eine Nut 7 bzw. 8 von halbkreisförmigem Querschnitt vorgesehen, die zusammen zwischen den Formhälften 2 und 3 einen Freiraum von kreisförmigem Querschnitt definieren. In diesen Freiraum wird über eine in Fig. 1 schematisch in Form einer Kanüle dargestellte Injektionseinrichtung 9 eine zunächst fließfähige Dichtmasse 10 unter Druck injiziert. Diese Dichtmasse 10 wird dann in dem Dichtbereich 1 fixiert, indem sie soweit vernetzt wird, dass sie den Dichtbereich 1 auch bei einem bei der Verwendung des Formwerkzeugs 4 auftretenden Druckunterschied zwischen dessen Formkavität 11 und der Umgebung 12 nicht verlässt. Beim Fixieren der Dichtmasse 10 in dem Dichtbereich 1 wird zudem ein Abdichtdruck gegen die gegeneinander abzudichtenden Dichtflächen 5 und 6 mit der Dichtmasse 10 eingestellt. Dieser Abdichtdruck kann durch weiteres Zusammenfahren der Formhälften 2 und 3 und entsprechendes Zusammendrücken der Dichtmasse 10 in dem Dichtbereich 1 weiter gesteigert werden.

**Fig. 2** zeigt das abgedichtete Formwerkzeug 4 mit der in dem Dichtbereich 1 zwischen den Dichtflächen 5 und 6 fixierten Dichtmasse 10. Die Dichtmasse 10 ist nach den Randbedingungen auszubilden, die durch die Verwendung des Formwerkzeugs 4 gesetzt werden. Sie muss beispielsweise den Temperaturen, die bei der Verwendung des Formwerkzeugs 4 zur Herstellung von Faserverbundbauteilen auftreten, standhalten, ohne ihre Dichtfunktion auch bei den gleichzeitig auftretenden hohen Drücken zu verlieren. Hierfür kommen Elastomere mit vergleichsweise hohem Vernetzungsgrad im fixierten Zustand der Dichtmasse in Frage.

**Fig. 3** skizziert den Dichtbereich 1 zwischen zwei Formhälften 2 und 3 eines gegenüber den Fig. 1 und 2 in folgenden Details veränderten Formwerkzeugs 4. Die den Dichtbereich 1 begrenzenden Dichtflächen 5 und 6 weisen hier jeweils drei halbkreisförmige Nuten 7 bzw. 8 auf, die parallel zueinander längs der Dichtlinie verlaufen. Zudem ist in der unteren Formhälfte 3 ein Injektionskanal 13 zum Injizieren der Dichtmasse 10 in den Dichtbereich 1 vorgesehen. Durch die jeweils drei Nuten 7 und 8 in den Dichtflächen 5 und 6 werden de facto drei hintereinander liegende Dichtebenen zwischen der Formkavität 11 und der Umgebung 12 aufgespannt.

**Fig. 4** skizziert den Randbereich eines Formwerkzeugs 4, dass neben einer unteren formsteifen Formhälfte 3 aus einer Vakuumfolie 14 aufgebaut ist. In der Formkavität 11 zwischen der Vakuumfolie 14 und der formsteifen Formhälfte 3 ist hier ein Fasergelege 15 angeordnet, dass nach dem Abdichten des Formwerkzeugs 4 und Evakuieren der Formkavität 11 mit flüssigem Harz infiltriert und beim anschließenden Aushärten des Harzes in die Harzmatrix des entstehenden Faserverbundbauteils eingebettet wird. Der Dichtbereich 1 ist hier zwischen einer Dichtfläche 6 der Formhälfte 3 und der die gegenüberliegende Dichtfläche 5 ausbildenden Unterseite 16 der Vakuumfolie 14 angeordnet, wobei nur in der Dichtfläche 6 eine Nut 8 ausgebildet ist, in die ein Injektionskanal 13 für die Dichtmasse 10 einmündet. Rückwärtig abgestützt wird die Vakuumfolie 14 und damit die Dichtfläche 5 oberhalb des Dichtbereichs 1 durch einen Abdichtrahmen 17. Dessen Abstützung 18 an oder zumindest relativ zu der formsteifen Formhälfte 3 ist durch eine Verbindungslinie angedeutet. In dem Abdichtrahmen 17 ist eine Heizeinrichtung 19 vorgesehen, mit der die Dichtmasse 10 in dem Dichtbereich 1 erwärmt werden kann, um sie zwecks Fixierens in dem Dichtbereich 1 definiert thermisch zu vernetzen, wobei eine chemische Anbindung an die Unterseite 16 der Vakuumfolie 14 durchaus erwünscht sein kann. Die Dichtfläche 6 und die Innenfläche des Injektionskanals 13 können hingegen mit einem Trennmittel für die Dichtmasse 10 beschichtet sein. So kann dann nach dem Öffnen des Formwerkzeugs 4 zum Entformen des fertigen Faserverbundbauteils die an der Vakuumfolie 14 klebende Dichtmasse 10 mit der Vakuumfolie 14 entfernt werden. Die Dichtmasse 10 ist in jedem Fall nur zum einmaligen Gebrauch vorgesehen. Sie kann zusammen mit der Vakuumfolie 14 oder zumindest einer unteren Lage der Vakuumfolie 14 nach ihrem einmaligen Gebrauch entsorgt werden.

**Fig. 5** skizziert die Möglichkeit der zusätzlichen Fixierung der Dichtmasse 10 in dem Dichtbereich 1 durch eine hinterschnittene Ausführung der Nuten 7 in den Dichtflächen 5 und 6. Hierdurch wird aber ein unmittelbares Auseinanderfahren der Formhälften 2 und 3 behindert. Entsprechend kann es sinnvoll sein, die Dichtmasse 10 zuvor mit einer Trenneinrichtung 20, beispielsweise in Form einer Klinge, zu durchtrennen. Auch wenn die Dichtmasse 10 ein unmittelbares Auseinanderfahren der Formhälften 2 und 3 bei der Ausbildung der Nuten 7 und 8 gemäß Fig. 5 behindert, kann ein Entfernen der Dichtmasse 10 aus den einzelnen Nuten, bei dem die Dichtmasse 10 sukzessive aus den Nuten 7 und 8 herausgezogen wird, völlig problemlos sein.

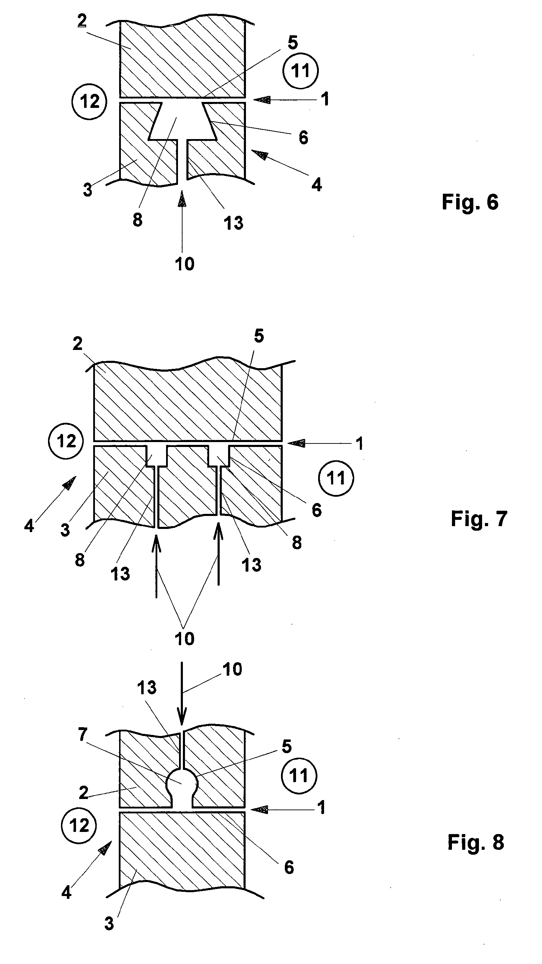

**Fig. 6** skizziert den Dichtbereich 1 eines Formwerkzeugs 4 zwischen zwei formsteifen Formhälften 2 und 3, wobei nur in der Dichtfläche 6 der Formhälfte 3 eine Nut 8 mit hier trapezförmig hinterschnittenem Querschnitt vorgesehen ist. Die Nut 8 nur in der Dichtfläche 6 führt, obwohl hier beide Dichtflächen 5 und 6 mit einem Trennmittel beschichtet sind, dazu, dass nach dem Auseinanderfahren der Formhälften 2 und 3 zum Entformen des fertigen Bauteils aus der Formkavität 11 die in Fig. 6 noch nicht in den Dichtbereich 1 eingespritzte Dichtmasse 10 nicht an der Formhälfte 2 anhängt, sondern nur in der Nut 8 bzw. an der Formhälfte 3 zurückbleibt. Die aus der Dichtmasse 10 ausgebildete Dichtung kann so durch einen definierten und entsprechend leicht automatisierbaren Prozess entfernt werden.

Diese Vorteile treffen auch auf das Formwerkzeug 4 gemäß **Fig. 7** zu, bei dem wieder nur in der Dichtfläche 6 eine doppelte Nut 8 mit zwei ineinander übergehende Nutvertiefungen vorgesehen ist. Dabei mündet in jede der Vertiefungen der Nut 8 ein Injektionskanal 13 für die Dichtmasse 10. Durch die zusammenhängenden Vertiefungen der Nut 8 bildet sich aus der Dichtmasse 10 eine zusammenhängende und nach dem Auseinanderfahren der Formhälften 2 und 3 zwar zuverlässig an der Formhälfte 3 anhängende aber leicht von dieser entfernbare Dichtung.

**Fig. 8** skizziert, dass eine einzige Nut 7 natürlich auch in der anderen Formhälfte 2 vorgesehen sein kann und auch keinen symmetrischen Querschnitt aufweisen muss. So ist die Nut 7 hier nur einseitig hinterschnitten, wodurch ein automatisiertes Entfernen der Dichtmasse 10 nach dem Auseinanderfahren der Formhälften 2 und 3 zwecks Entformen des fertig gestellten Bauteils aus der Formkavität 11 besonders einfach sein kann.

### BEZUGSZEICHENLISTE

- 1: Dichtbereich
- 2: Formhälfte
- 3: Formhälfte
- 4: Formwerkzeug
- 5: Dichtfläche
- 6: Dichtfläche
- 7: Nut
- 8: Nut
- 9: Injektionseinrichtung
- 10: Dichtmasse
- 11: Formkavität
- 12: Umgebung
- 13: Injektionskanal
- 14: Vakuumfolie
- 15: Fasergelege
- 16: Unterseite
- 17: Abdichtrand
- 18: Abstützung
- 19: Heizeinrichtung
- 20: Trenneinrichtung

## Patentansprüche

1. Verfahren zur Fertigung von Bauteilen in einem druckdichten Formwerkzeug, wobei das Formwerkzeug (4) abgedichtet wird, wobei über die Abdichtung des Formwerkzeugs ein Differenzdruck aufgebracht wird und wobei ein flüssiges Harz in dem Formwerkzeug (4) ausgehärtet wird, bevor das so aus dem Harz gefertigte Bauteil aus dem Formwerkzeug (4) entformt wird, wobei zum Abdichten des Formwerkzeugs (4) eine polymere Dichtmasse (10) in fließfähiger Form in einen Dichtbereich (1) des Formwerkzeugs (4) zwischen zwei gegeneinander abzudichtenden Dichtflächen (5, 6) eingebracht und dort unter Bereitstellen eines gegen die gegeneinander abzudichtenden Dichtflächen (5, 6) gerichteten Abdichtdrucks durch die Dichtmasse (10) fixiert wird, **dadurch gekennzeichnet, dass** die fließfähige Dichtmasse (10) zwischen die einander gegenüberliegenden und gegeneinander abgestützten Dichtflächen (5, 6) injiziert wird und dass die Dichtmasse (10) zum einmaligen Gebrauch vorgesehen ist und nach ihrem einmaligen Gebrauch entfernt wird.

2. Verfahren nach Anspruch 1, **dadurch gekennzeichnet, dass** die fließfähige Dichtmasse (10) durch zumindest teilweises Vernetzen in dem Dichtbereich (1) des Formwerkzeugs (4) fixiert wird.

3. Verfahren nach Anspruch 1 oder 2, **dadurch gekennzeichnet, dass** die fließfähige Dichtmasse (10) unter Druck in den Dichtbereich (1) des Formwerkzeugs (4) eingebracht und in diesem fixiert wird.

4. Verfahren nach einem der vorhergehenden Ansprüche, **dadurch gekennzeichnet, dass** der Dichtbereich (1) durch mindestens eine, längs einer Dichtlinie verlaufende Nut (7, 8) in einer der Dichtflächen (5, 6) definiert wird.

5. Verfahren nach einem der vorhergehenden Ansprüche, **dadurch gekennzeichnet, dass** eine Vorform mit einem Fasergelege (15) in das Formwerkzeug (4) eingebracht wird, bevor das Formwerkzeug (4) abgedichtet wird.

6. Verfahren nach Anspruch 5, **dadurch gekennzeichnet, dass** das flüssige Harz in das zuvor evakuierte Formwerkzeug (4) injiziert wird, um die Vorform darin einzubetten.

## Claims

1. Method for producing components in a pressure-tight moulding tool, wherein the moulding tool (4) is sealed, wherein a differential pressure is applied over the sealing of the moulding tool, and wherein a liquid resin is cured within the moulding tool (4) prior to removing the component made of the resin from the moulding tool (4), wherein for sealing the moulding tool (4) a polymeric sealing material (10), in a fluid form, is applied in a sealing area (1) of the moulding tool (4) between two sealing surfaces (5, 6) which are to be sealed against each other and is fixed there providing a sealing pressure directed against the sealing surfaces (5, 6) which are to be sealed against each other by the sealing material (10), **characterised in that** the fluid sealing material (10) is injected between the sealing surfaces (5, 6) which are to be sealed against each other and which are mutually supported at each other and that the sealing material (10) is provided for one-time use and is removed after its one-time use.

2. Method of claim 1, **characterised in that** the fluid sealing material (10) is fixed in the sealing area 1 of the moulding tool (4) by at least partial cross-linking.

3. Method of claim 1 or 2, **characterised in that** the fluid sealing material (10) is applied in the sealing area (1) of the moulding tool (4) and fixed there under pressure.

4. Method of any of the preceding claims, **characterised in that** the sealing area (1) is defined by at least one channel (7, 8) within one of the sealing surfaces (5, 6) running along a sealing line.

5. Method of any of the preceding claims, **characterised in that** a preform comprising a fibre fabric (15) is placed in the moulding tool (4) prior to sealing the moulding tool (4).

6. Method of claim 5, **characterised in that** the liquid resin is injected into the previously evacuated moulding tool (4) to embed the preform therein.

## Revendications

1. Procédé de fabrication de composants dans un outil de formage étanche à la pression, dans lequel l'outil de formage (4) est étanchéifié, dans lequel une pression différentielle est appliquée au-delà de l'étanchéification de l'outil de formage et dans lequel une résine liquide est durcie dans l'outil de formage (4) avant que le composant ainsi fabriqué à partir de la résine soit démoulé de l'outil de formage (4), étant entendu que pour étanchéifier l'outil de formage (4), une masse d'étanchéité polymère (10) sous forme fluide est introduite dans une zone d'étanchéité (1) de l'outil de formage (4) entre deux surfaces d'étanchéité (5, 6) qui doivent être étanchéifiées l'une par rapport à l'autre et fixée à cet endroit par l'exercice d'une pression d'étanchéification dirigée à l'opposé des surfaces d'étanchéité (5, 6) qui doivent être étanchéifiées l'une par rapport à l'autre au travers de la masse d'étanchéité (10), **caractérisé en ce que** la masse d'étanchéité fluide (10) est injectée entre les surfaces d'étanchéité (5, 6) situées en opposition l'une par rapport à l'autre et prenant appui l'une contre l'autre et **en ce que** la masse d'étanchéité (10) est prévue pour un usage unique et elle est éliminée après son usage unique.

2. Procédé selon la revendication 1, **caractérisé en ce que** la masse d'étanchéité fluide (10) est fixée par une réticulation au moins partielle dans la zone d'étanchéité (1) de l'outil de formage (4).

3. Procédé selon la revendication 1 ou 2, **caractérisé en ce que** la masse d'étanchéité fluide (10) est introduite dans la zone d'étanchéité (1) de l'outil de formage (4) et fixée dans celle-ci sous pression.

4. Procédé selon l'une des revendications précédentes, **caractérisé en ce que** la zone d'étanchéité (1) est définie par au moins une rainure (7, 8) s'étendant le long d'une ligne d'étanchéité dans l'une des surfaces d'étanchéité (5, 6).

5. Procédé selon l'une des revendications précédentes, **caractérisé en ce qu'**un moule ébaucheur comprenant un tissu de fibres (15) est installé dans l'outil de formage (4) avant que l'outil de formage (4) soit étanchéifié.

6. Procédé selon la revendication 5, **caractérisé en ce que** la résine liquide est injectée dans l'outil de formage (4) préalablement mis sous vide afin de noyer le moule ébaucheur dans celle-ci.
